# EUROPÄISCHE PATENTSCHRIFT

(11) **EP 3 353 903 B1**
(45) Veröffentlichungstag und Bekanntmachung des Hinweises auf die Patenterteilung: **12.03.2025**
(21) Anmeldenummer: 17722373.2
(22) Anmeldetag: 05.05.2017
(51) Int. Cl.: H04B 3/54

(54) **MODEM UND VERFAHREN ZUR ÜBERTRAGUNG VON DATEN**
MODEM AND METHOD FOR TRANSMITTING DATA
MODEM ET PROCÉDÉ DE TRANSMISSION DE DONNÉES

(30) Priorität: 06.05.2016 DE 202016002968 U
(43) Veröffentlichungstag der Anmeldung: 01.08.2018
(73) Patentinhaber: Telefónica Germany GmbH & Co. OHG, 80992 München (DE)
(72) Erfinder: SETZER, Herbert, 82024 Taufkirchen (DE); SCHRÖDER, Chris, 80999 München (DE)
(74) Vertreter: Herrmann, Uwe
(86) Internationale Anmeldenummer: PCT/EP2017/000561
(87) Internationale Veröffentlichungsnummer: WO 2017/190841

(56) Entgegenhaltungen:
- EP-A1- 3 107 219
- EP-B1- 3 107 219
- JP-A- 2011 250 301
- US-A1- 2003 179 714
- US-A1- 2011 140 911
- US-B1- 9 634 723

## Beschreibung

Die Erfindung betrifft ein Modem gemäß dem Oberbegriff des Anspruchs 1. Des Weiteren betrifft die Erfindung ein Verfahren zum Betrieb eines derartigen Modems. Ein Modem ist ein Modulator und/oder ein Demodulator und dient zur Übertragung digitaler Daten.

In der Druckschrift DE 10 2009 007 003 A1 ist ein Modem offenbart, das Daten über das Stromversorgungsnetz überträgt. Dabei wird als möglicher Einsatzbereich für ein derartiges Modem die Übertragung der Daten eines Stromzählers genannt. Die Technik nutzt dabei typischerweise verschiedene einzelne Trägerfrequenzen im Bereich oberhalb von 1,8 MHz zur Modulation und Demodulation der Daten im Mehrträger-Verfahren (OFDM).

Nachteilig an derartigen Modems ist, dass sie auf einer singulären Datenübertragungstechnologie basieren, dadurch keine Redundanzmöglichkeiten aufweisen und somit eine geringere Verfügbarkeit gewährleisten. Diese singuläre Übertragungstechnologie birgt den Nachteil, dass sie nicht alle gewünschten Situationen mit dieser einen Technologie (PLC) im Feld abdecken kann. Damit ist der Nachteil verbunden, dass mit dieser bestehenden Technologie nur eine eingeschränkte Datenübertragung an jedem Modem möglich ist.

Die EP 3 107 219 A1 , die zum Stand der Technik nach Artikel 54(3) des EPÜ gehört, offenbart eine Anordnung mit Uplink-Knoten, die wahlweise mit einem Primär-Netzwerk, vorzugsweise mit einem Mobilfunknetz, oder mit einem Sekundärnetz, vorzugsweise mittels PLC (Power Line Communication), kommunizieren. Aus der US 2011/140911 A1 ist ein System bekannt, das die Kommunikation über Stromleitungen (PLC) ermöglicht. Bei Ausfällen der Stromleitung wird ein drahtloses Backup zu einem Mobilfunknetz verwendet.

Dem gegenüber liegt der Erfindung die Aufgabe zu Grunde, ein Modem bzw. ein Verfahren zu schaffen, das eine höhere Verfügbarkeit der Datenübertragung an jedem Punkt in dem gesamten Kommunikationsnetz bietet.

Diese Aufgabe wird gelöst durch ein Modem mit den Merkmalen des Anspruchs 1 sowie durch ein Verfahren mit den Merkmalen des Anspruchs 7.

Das beanspruchte Modem dient zur Übertragung von Daten über ein Stromversorgungsnetz mittels Powerline Communication (PLC). Erfindungsgemäß ist das Modem ein Hybrid-Modem oder Dual-Modem, das in Ergänzung oder vorzugsweise alternativ zur Übertragung der Daten über das Stromversorgungsnetz mittels Powerline Communication auch zur Übertragung der Daten über ein Mobilfunknetz ausgelegt ist. Damit ist ein Modem geschaffen, das eine erhöhte Verfügbarkeit der Datenübertragung bietet.

Das beanspruchte Verfahren betrifft die Übertragung von Daten mittels eines Modems gemäß der vorliegenden Erfindung.

Die im Folgenden beschriebenen bevorzugten Ausführungsformen gelten gleichermaßen für das Modem gemäß der Erfindung sowie auch für das Verfahren gemäß der Erfindung.

Das Modem weist ein oder mehrere Mittel auf, durch die die jeweils beanspruchten Merkmale bzw. Schritte, wie z.B. die Umschaltung zwischen der Datenübertragung über das Stromversorgungsnetz und zwischen der Datenübertragung über das Mobilfunknetz, diese Umschaltung in Abhängigkeit eines oder mehrerer Parameter etc. durchführbar sind.

Bei einem besonders bevorzugten Einsatz sind von dem Hybrid-Modem bzw. durch das Verfahren Energieverbrauchsdaten übertragbar. Dann ist das Hybrid-Modem bzw. das Verfahren von einem Energieversorgungsunternehmen - vorzugsweise Stromversorgungsunternehmen - nutzbar, um die Verbrauschdaten - vorzugsweise Stromverbrauchdaten - seiner Kunden zu übertragen.

Weitere vorteilhafte Ausgestaltungen der Erfindung sind in den abhängigen Ansprüchen beschrieben.

Erfindungsgemäß ist vorgesehen, dass das erfindungsgemäße Hybrid-Modem bzw. gemäß dem erfindungsgemäßen Verfahren ist in Abhängigkeit mehrerer Parameter zwischen dem Mobilfunknetz und dem Stromversorgungsnetz umschaltbar. Die Parameter sind gewichtet. Damit kann das Hybrid-Modem bzw. gemäß des Verfahrens automatisch und zu jedem Zeitpunkt stets die optimale Datenübertragung auswählen.

Die Parameter sind aus folgender Gruppe ausgewählt: Signalstärke und -qualität, Latenz, Datenübertragungsrate, Anzahl der Hops, indirektes Ablesen durch Bewertung des Verhaltens beim Auf-/Abbau von Übertragungspuffern sowie anfallende monetäre Kosten. Die beiden Parameter Signalstärke und -qualität liefern eine Aussage zur Intensität und Güte der Datenübertragung. Die Latenz gibt an, wie hoch die Laufzeit einzelner Pakete ist. Die Datenübertragungsrate bezeichnet die Datenmenge, die in einer definierten Zeiteinheit über einen Übertragungskanal übertragen wird. Durch das indirekte Ablesen und die Bewertung des Verhaltens beim Auf-/Abbau von Übertragungspuffern soll angezeigt werden, dass das erfindungsgemäße Hybrid-Modem aufgrund des Pufferverhaltens eingesetzter Netzwerkprotokolle Rückschlüsse auf die Datenverbindung vornimmt.

Bei einer besonders bevorzugten Weiterbildung ist das Mobilfunknetz gegenüber dem Stromversorgungsnetz bzw. der Powerline Communication priorisiert.

Vorzugsweise ist das Mobilfunknetz öffentlich, was den Vorteil einer flexiblen und flächendeckenden Verfügbarkeit bietet.

Vorzugsweise ist das Mobilfunknetz aus einer Gruppe zumindest zweier Mobilfunknetze auswählbar. Damit ist Roaming möglich, und die Verfügbarkeit kann weiter verbessert werden.

Vorzugsweise sind dabei die Mobilfunknetze der Gruppe untereinander priorisiert. Wenn die Priorisierung z.B. nach Kosten erfolgt ist, kann die Datenübertragung kostengünstiger werden.

Vorzugsweise ist die Datenübertragung über das Stromversorgungsnetz mittels Powerline Communication breitband-moduliert (BPL). Durch die Nutzung eines breiten Bandes steht eine hohe Anzahl von Kanälen zur Verfügung, was zu einer sehr großen Robustheit und zu einer hohen Datenübertragungsrate führt.

Vorzugsweise ist die Datenübertragung über das Stromversorgungsnetz mittels Powerline Communication im hochfrequenten Bereich angesiedelt. Durch die Nutzung höherer Frequenzen ist eine höhere Datenübertragungsrate gewährleistet.

Bei einer besonders bevorzugten Weiterbildung erfolgt die Datenübertragung über das Stromversorgungsnetz mittels Powerline Communication über ein vermaschtes

Netz. Dieses ist intelligent, selbstaufbauend und selbstheilend, wodurch die Verfügbarkeit und Sicherheit der Datenübertragung verbessert wird.

Vorzugsweise ist das vermaschte Netz in einem lizenzfreien und/oder nicht eingeschränkten Frequenzband betrieben. Dadurch ist die Wahl der Technologie frei und flexibel.

Vorzugsweise arbeitet das vermaschte Netz mit offenen IP-Standards. Die eingesetzten Technologien sind somit interoperabel, die Wahl der Technologien ist flexibler, eine Entwicklung ist auch herstellerunabhängig möglich.

Bei einer besonders bevorzugten Weiterbildung überträgt das erfindungsgemäße Hybrid-Modem bzw. werden gemäß dem erfindungsgemäßen Verfahren die gesammelten Verbrauchsdaten mehrerer Smartmeter eines Gebäudes übertragen. Das Gebäude kann z.B. ein Mehrfamilienhaus sein. Damit ist das erfindungsgemäße Hybrid-Modem bzw. Verfahren effizient eingesetzt.

Erfindungsgemäß ist das Hybrid-Modem bzw. dessen Gehäuse im Zählerschrank, beispielsweise im Keller des Gebäudes montierbar bzw. montiert, da dort oft die Verbrauchsdaten gesammelt werden.

Vorzugsweise ist das Hybrid-Modem mit einem Smartmeter-Gateway verbindbar oder verbunden. Dadurch besitzt das Smartmeter-Gateway eine dedizierte Kommunikationskomponente. Dabei kann das Hybrid-Modem auch in das Smartmeter-Gateway integriert sein. Somit ergibt sich eine kompakte Einheit. Das Modem kann aber auch als reines Repeating-Modul (also auch ohne Anbindung an ein Gateway) auf der PLC-Strecke zum Einsatz kommen.

Vorzugsweise wählt das vermaschte Netz selbständig den optimalen (z.B. kürzesten) Weg zu einem Smartmeter-Gateway mit Mobilfunkabdeckung oder mit Mobilfunknetz. Von dort können die Verbrauchsdaten dann weiter über das priorisierte Mobilfunknetz übertragen werden.

Insbesondere betrifft das erfindungsgemäße Verfahren ein oben beschriebenes erfindungsgemäßes Hybrid-Modem, das für die Übertragung von Daten einerseits über ein Mobilfunknetz und andererseits über ein Stromversorgungsnetz mittels Powerline Communication (PLC) ausgelegt ist.

Gemäß des Verfahrens erfolgt die Datenübertragung über das Stromversorgungsnetz, d.h. über PLC, über das Mobilfunknetz oder über beides.

Erfindungsgemäß ist vorgesehen, dass das Hybrid-Modem in Abhängigkeit mehrerer Parameter zwischen dem Mobilfunknetz und dem Stromversorgungsnetz bzw. der Powerline Communication umgeschaltet wird. Damit kann automatisch und zu jedem Zeitpunkt stets die optimale Datenübertragung ausgewählt werden und es ist eine erhöhte Verfügbarkeit der Datenübertragung gegeben.

Gemäß der erfindungsgemäßen Ausgestaltung des Verfahrens sind die Parameter aus folgender Gruppe ausgewählt: Signalstärke und -qualität, Latenz, Datenübertragungsrate, Anzahl der Hops, indirektes Ablesen durch Bewertung des Verhaltens beim Auf-/Abbau von Übertragungspuffern sowie anfallende monetäre Kosten. Die beiden Parameter Signalstärke und -qualität liefern eine Aussage zur Intensität und Güte der Datenübertragung. Die Latenz gibt an, wie hoch die Laufzeit einzelner Pakete ist. Die Datenübertragungsrate bezeichnet die Datenmenge, die in einer definierten Zeiteinheit über einen Übertragungskanal übertragen wird. Durch das indirekte Ablesen und die Bewertung des Verhaltens beim Auf-/Abbau von Übertragungspuffern soll angezeigt werden, dass aufgrund des Pufferverhaltens eingesetzter Netzwerkprotokolle Rückschlüsse auf die Datenverbindung vorgenommen werden.

Gemäß einer besonders bevorzugten Weiterbildung des Verfahrens wird das Mobilfunknetz gegenüber dem Stromversorgungsnetz mittels der Powerline Communication priorisiert ausgewählt.

Das Mobilfunknetz kann öffentlich sein. Dadurch ist das Netz flächendeckend verfügbar und hat eine hohe Durchdringung.

Gemäß einer bevorzugten Weiterbildung des Verfahrens wird das Mobilfunknetz aus einer Gruppe zumindest zweier Mobilfunknetze ausgewählt. Damit ist Roaming möglich, und die Übertragungssicherheit kann weiter verbessert werden.

Vorzugsweise werden die Mobilfunknetze der Gruppe untereinander priorisiert. Wenn die Priorisierung z.B. nach Kosten erfolgt, kann die Datenübertragung kostengünstiger werden.

Vorzugsweise wird die Datenübertragung über das Stromversorgungsnetz mittels Powerline Communication breitband-moduliert (BPL). Durch die Nutzung eines breiten Bandes steht eine große Anzahl von Kanälen zur Verfügung, was zu sehr großen Robustheit und einer hohen Datenübertragungsrate führt.

Vorzugsweise ist die Datenübertragung über das Stromversorgungsnetz bzw. die Powerline Communication im hochfrequenten Bereich angesiedelt. Durch die Nutzung höherer Frequenzen ist eine höhere Datenübertragungsrate gewährleistet.

Vorzugsweise erfolgt die Datenübertragung über das Stromversorgungsnetz mittels Powerline Communication über ein vermaschtes Netz. Dieses ist intelligent, selbstaufbauend und selbstheilend, wodurch die Verfügbarkeit und Sicherheit der Datenübertragung verbessert wird.

Vorzugsweise wird das vermaschte Netz in einem lizenzfreien und/oder nicht eingeschränkten Frequenzband betrieben. Dadurch ist die Wahl der Technologie frei und flexibel.

Die Daten, die gemäß dem Verfahren übertragen werden, können in einem bevorzugten Anwendungsfall die gesammelten Verbrauchsdaten mehrerer Smartmeter eines Gebäudes z.B. Mehrfamilienhauses sein.

Bei einer vorteilhaften Weiterbildung des Verfahrens wählt das vermaschte Netz selbständig den optimalen (z.B. kürzesten) Weg zu einem Smartmeter-Gateway mit Mobilfunkabdeckung oder mit Mobilfunknetz. Von dort werden die Daten dann weiter über das priorisierte Mobilfunknetz übertragen.

An dieser Stelle wird darauf hingewiesen, dass die Begriffe "ein" oder "eine" nicht zwingend genau eines der fraglichen Elemente betreffen, wenngleich dies eine mögliche Ausführungsform darstellt, sondern auch eine Mehrzahl der fraglichen Elemente umfassen. Entsprechendes gilt für die Verwendung des Plurals, der auch nur eines der Elemente umfasst und umgekehrt für die Verwendung des Singulars, der auch eine Mehrzahl der Elemente umfasst.

Ein Ausführungsbeispiel eines erfindungsgemäßen Hybrid-Modems ist in den Figuren dargestellt. Anhand dieser Figuren wird die Erfindung nun näher erläutert.

Es zeigen:

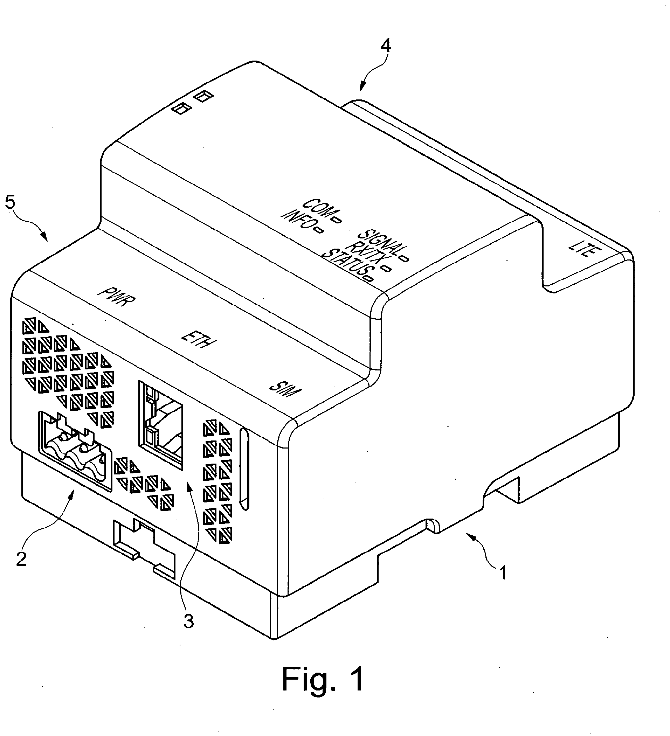

- Figur 1:: eine perspektivische Ansicht des erfindungsgemäßen Hybrid-Modems gemäß dem Ausführungsbeispiel, und

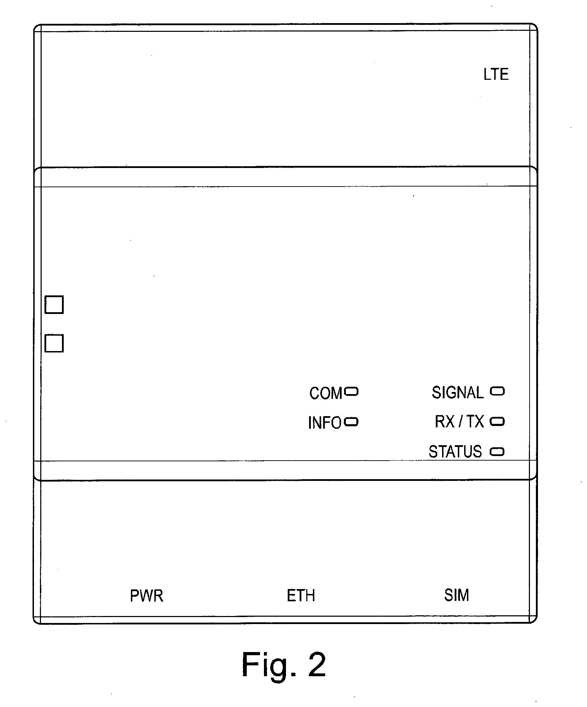

- Figur 2:: eine Frontansicht des erfindungsgemäßen Hybrid-Modems aus Figur 1.

Ein Gehäuse 5 des Hybrid-Modems gemäß dem Ausführungsbeispiel hat einen Formfaktor, der mit dem in Deutschland zum Einsatz kommenden Smart Meter Gateway (SMGW) identisch ist. Es bemisst sich auf die genormten 4 Teileinheiten à 18 mm und ist somit, mit den entsprechenden Ausbuchtungen 1 für die Abdeckung, für den Einbau in einen FNN-Zähler bzw. auf der dort vorhandenen Hutschiene vorgesehen. Der Einbau kann aber auch unabhängig von einem FNN-Zähler auf einer separaten Hutschiene, beispielsweise im Zählerkasten erfolgen.

Der Stromanschluss (230V-) erfolgt über die Stromversorgung des SMGW-Anschlusses per Y-Kabel und mittels einer Standardsteckvorrichtung 2 am Hybrid-Modem.

Die Kommunikations-Verbindung zum SMGW wird durch eine RJ-45 Steckverbindung 3 und mittels Ethernet-Kabel hergestellt.

Ein Anschluss für die Mobilfunk-Antenne erfolgt durch eine genormte FAKRA Steckverbindung 4 am hinteren oder oberen Teil des Gehäuses 5.

Offenbart ist ein Hybrid-Modem zur Verwendung einerseits in einem Mobilfunknetz und andererseits in einem vermaschten Netz, das im Stromversorgungsnetz aufgebaut wird. Damit kann das Hybrid-Modem besonders gut von Stromversorgungsunternehmen oder von Energieversorgungsunternehmen verwendet werden, um den Strom- oder Energieverbrauch seiner Kunden aus deren Zählerschränken, beispielsweise im Keller zu übertragen. Dabei werden die Verbrauchsdaten von Smartmetern erfasst und an Smartmeter-Gateways gesammelt und von dort über das Hybrid-Modem zum Energieversorgungsunternehmen übertragen.

### Bezugszeichenliste

- 1: Ausbuchtungen zur Befestigung an einer Hutschiene
- 2: Standardsteckvorrichtung
- 3: RJ-45 Steckverbindung
- 4: FAKRA Steckverbindung
- 5: Gehäuse

## Patentansprüche

1. Modem zur Übertragung von Daten über ein Stromversorgungsnetz mittels Powerline Communication, wobei das Modem ein Hybrid-Modem ist, das alternativ oder in Ergänzung zur Übertragung der Daten über das Stromversorgungsnetz, d.h. über die Powerline Communication zur Übertragung der Daten über ein Mobilfunknetz ausgelegt ist, wobei das Modem derart ausgebildet ist, dass die Datenübertragung über das Stromversorgungsnetz über ein vermaschtes Netz erfolgt, und wobei das Modem derart ausgebildet ist, dass es in Abhängigkeit mehrerer Parameter zwischen dem Mobilfunknetz und dem Stromversorgungsnetz umschaltbar ist, **dadurch gekennzeichnet, dass** die Parameter aus folgender Gruppe ausgewählt sind: Signalstärke, Signalqualität, Latenz, Datenübertragungsrate, sowie Anzahl der Hops, wobei die Parameter gewichtet sind und dass das Modem ein Gehäuse aufweist, das zum Einbau in einen FNN-Zähler, eine Hutschiene oder in einen Zählerschrank vorgesehen ist

2. Modem nach einem der vorhergehenden Ansprüche, **dadurch gekennzeichnet, dass** das Modem derart ausgebildet ist, dass das Mobilfunknetz gegenüber dem Stromversorgungsnetz oder der Powerline Communication priorisiert ist, wobei das Modem vorzugsweise derart ausgebildet ist, dass das Mobilfunknetz aus einer Gruppe zumindest zweier Mobilfunknetze auswählbar ist, wobei die Mobilfunknetze der Gruppe bevorzugt untereinander priorisiert sind.

3. Modem nach einem der vorhergehenden Ansprüche, **dadurch gekennzeichnet, dass** das Mobilfunknetz derart ausgebildet ist, dass das Mobilfunknetz öffentlich ist.

4. Modem nach einem der vorhergehenden Ansprüche, **dadurch gekennzeichnet, dass** das Modem derart ausgebildet ist, dass die Datenübertragung über das Stromversorgungsnetz breitband-moduliert ist, wobei bevorzugt die Datenübertragung über das Stromversorgungsnetz hochfrequent ist.

5. Modem nach Anspruch 1, **dadurch gekennzeichnet, dass** das Modem derart ausgebildet ist, dass das vermaschte Netz in einem lizenzfreien und/oder nicht eingeschränkten Frequenzband betrieben wird, wobei vorzugweise das vermaschte Netz mit offenen IP-Standards arbeitet.

6. Modem nach einem der vorhergehenden Ansprüche, **dadurch gekennzeichnet, dass** das Modem derart ausgebildet ist, dass die Daten die gesammelten Verbrauchsdaten mehrerer Smartmeter eines Gebäudes sind und/oder das Modem vorzugsweise derart ausgebildet ist, dass es mit einem Smartmeter-Gateway verbindbar oder verbunden oder in dieses integriert ist.

7. Verfahren zur Übertragung von Daten, **dadurch gekennzeichnet, dass** das Verfahren unter Verwendung eines Modems nach einem der Ansprüche 1 bis 6 durchgeführt wird, wobei das Modem ein Gehäuse aufweist, das zum Einbau in einen FNN-Zähler, eine Hutschiene oder in einen Zählerschrank vorgesehen ist, wobei die Übertragung von Daten mittels des Modems über ein Stromversorgungsnetz mittels Powerline Communication oder alternativ oder in Ergänzung zur Übertragung der Daten über das Stromversorgungsnetz, d.h. über die Powerline Communication, über ein Mobilfunknetz erfolgt, wobei die Datenübertragung über das Stromversorgungsnetz über ein vermaschtes Netz erfolgt, und wobei dass es in Abhängigkeit mehrerer Parameter zwischen dem Mobilfunknetz und dem Stromversorgungsnetz umschaltbar ist, wobei die Parameter aus folgender Gruppe ausgewählt sind: Signalstärke, Signalqualität, Latenz, Datenübertragungsrate, sowie Anzahl der Hops, wobei die Parameter gewichtet sind.

8. Verfahren nachAnspruch 7, wobei das Mobilfunknetz gegenüber dem Stromversorgungsnetz oder der Powerline Communication priorisiert wird, wobei das Mobilfunknetz bevorzugt aus einer Gruppe zumindest zweier Mobilfunknetze ausgewählt wird und das die Mobilfunknetze der Gruppe untereinander bevorzugt priorisiert sind oder werden.

9. Verfahren nach einem der Ansprüche 7 oder 8, **dadurch gekennzeichnet, dass** das Mobilfunknetz öffentlich ist.

10. Verfahren nach einem der Ansprüche 7 bis 9,
**dadurch gekennzeichnet,**
**dass** die Datenübertragung über das Stromversorgungsnetz breitband-moduliert ist und die Datenübertragung über das Stromversorgungsnetz vorzugsweise hochfrequent ist.

11. Verfahren nach einem der Ansprüche 7 bis 10,
**dadurch gekennzeichnet,**
**dass** das vermaschte Netz in einem lizenzfreien und/oder nicht eingeschränkten Frequenzband betrieben wird und vorzugsweise das vermaschte Netz mit offenen IP-Standards arbeitet.

12. Verfahren nach einem der Ansprüche 7 bis 11,
**dadurch gekennzeichnet,**
**dass** die Daten die gesammelten Verbrauchsdaten mehrerer Smartmeter eines Gebäudes sind, und wobei das Modem idealerweisemit einem Smartmeter-Gateway verbindbar ist oder verbunden wird oder in dieses integriert ist.

13. Verfahren nach einem der Ansprüche 7 bis 12,
**dadurch gekennzeichnet,**
**dass** das vermaschte Netz selbständig einen optimalen Weg zu einem Smartmeter-Gateway mit Mobilfunkabdeckung oder mit Mobilfunknetz wählt.

## Claims

1. A modem for transmitting data via an electric power grid by means of Powerline communication, wherein the modem is a hybrid modem which is configured to transmit data via a mobile communications network, alternatively or additionally to the transmission of data via the electric power grid, i.e. via the Powerline communication, wherein the modem is configured in such a way that the data transmission via the electric power grid is performed via a meshed network, and wherein the modem is configured in such a way that it is switchable between the mobile communications network and the electric power grid in dependence on a plurality of parameters, **characterised in that** the parameters are selected from the following group: signal strength, signal quality, latency, data transmission rate and number of hops, wherein the parameters are weighted, and **in that** the modem has a housing that is intended for installation in an FNN meter, a DIN rail or in a meter cabinet.

2. The modem according to any one of the preceding claims, **characterised in that** the modem is configured in such a way that the mobile communications network is prioritised over the electric power grid or the Powerline communication, wherein the modem is preferably configured in such a way that the mobile communications network is selectable from a group of at least two mobile communications networks, wherein the mobile communications networks are preferably prioritised among one another.

3. The modem according to any one of the preceding claims, **characterised in that** the mobile communications network is configured in such a way that the mobile communications network is public.

4. The modem according to any one of the preceding claims, **characterised in that** the modem is designed in such a way that the data transmission via the electric power grid is broadband-modulated, wherein the data transmission via the electric power grid is preferably high-frequency.

5. The modem according to claim 1, **characterised in that** the modem is configured in such a way that the meshed network is operated in a licence-free and/or non-limited frequency band, wherein the meshed network preferably operates with open IP standards.

6. The modem according to any one of the preceding claims, **characterised in that** the modem is configured in such a way that the data are the collected consumption data of a plurality of smart meters of a building and/or the modem is preferably configured in such a way that it is connectable or connected to a smart meter gateway or is integrated therein.

7. A method for transmitting data, **characterised in that** the method is carried out using a modem according to any one of claims 1 to 6, wherein the modem has a housing that is intended for installation in an FNN meter, a DIN rail or in a meter cabinet, wherein the transmission of data is performed by means of the modem via an electric power grid by means of Powerline communication or alternatively, in addition to the transmission of the data via the electric power grid, i.e. via the Powerline communication, via a mobile communications network, wherein the data transmission via the electric power grid is performed via. meshed network, and wherein it is switchable between the mobile communications network and the electric power grid in dependence on a plurality of parameters, wherein the parameters are selected from the following group: signal strength, signal quality, latency, data transmission rate and number of hops, wherein the parameters are weighted.

8. The method according to claim 7, wherein the mobile communications network is prioritised over the electric power grid or the Powerline communication, wherein the mobile communications network is preferably selected from a group of at least two mobile communications networks and the mobile communications networks in the group are preferably prioritised among one another.

9. The method according to any one of claims 7 or 8, **characterised in that** the mobile communications network is public.

10. The method according to any one of claims 7 to 9,
**characterised in that**
the data transmission via the electric power grid is broadband-modulated and the data transmission via the electric power grid is preferably high-frequency.

11. The method according to any one of claims 7 to 10,
**characterised in that**
the meshed network is operated in a licence-free and/or non-limited frequency band, and preferably the meshed network operates with open IP standards.

12. The method according to any one of claims 7 to 11,
**characterised in that**
the data are the collected consumption data of a plurality of smart meters of a building, and wherein the modem is ideally connectable or connected to a smart meter gateway or is integrated therein.

13. The method according to any one of claims 7 to 12,
**characterised in that**
the meshed network independently selects an optimal path to a smart meter gateway with mobile communications coverage or with mobile communications network.

## Revendications

1. Modem de transmission de données par l'intermédiaire d'un réseau d'alimentation électrique au moyen d'une technologie du courant porteur en ligne, dans lequel le modem est un modem hybride, qui est conçu pour transmettre les données par l'intermédiaire d'un réseau de téléphonie mobile en variante ou en complément de la transmission des données par l'intermédiaire du réseau d'alimentation électrique, en d'autres termes par l'intermédiaire de la technologie du courant porteur en ligne, et dans lequel le modem est réalisé de telle manière que la transmission de données est effectuée par l'intermédiaire d'un réseau interconnecté par l'intermédiaire du réseau d'alimentation électrique, et dans lequel le modem est réalisé de telle manière qu'il peut être commuté en fonction de plusieurs paramètres entre le réseau de téléphonie mobile et le réseau d'alimentation électrique, **caractérisé en ce que** les paramètres sont choisis parmi un groupe suivant : intensité du signal, qualité du signal, latence, vitesse de transmission de données ainsi que nombre des sauts, dans lequel les paramètres sont pondérés et le modem présente un boîtier, qui est prévu pour être monté dans un compteur de FNN [functional node network - réseau de nœuds fonctionnels], un rail DIN ou une armoire de compteurs.

2. Modem selon la revendication précédente, **caractérisé en ce que** le modem est réalisé de telle manière que le réseau de téléphonie mobile est priorisé par rapport au réseau d'alimentation électrique ou à la technologie du courant porteur en ligne, dans lequel le modem est réalisé de préférence de telle manière que le réseau de téléphonie mobile peut être choisi parmi un groupe d'au moins deux réseaux de téléphonie mobile, dans lequel les réseaux de téléphonie mobile du groupe sont priorisés de manière préférée entre eux.

3. Modem selon l'une quelconque des revendications précédentes, **caractérisé en ce que** le réseau de téléphonie mobile est réalisé de telle manière que le réseau de téléphonie mobile est public.

4. Modem selon l'une quelconque des revendications précédentes, **caractérisé en ce que** le modem est réalisé de telle manière que la transmission de données est modulée par bande large par l'intermédiaire du réseau d'alimentation électrique, dans lequel de manière préférée la transmission de données est à haute fréquence par l'intermédiaire du réseau d'alimentation électrique.

5. Modem selon la revendication 1, **caractérisé en ce que** le modem est réalisé de telle manière que le réseau interconnecté fonctionne à une bande de fréquence sans licence et/ou non restreinte, dans lequel de préférence le réseau interconnecté fonctionne avec des normes IP ouvertes.

6. Modem selon l'une quelconque des revendications précédentes, **caractérisé en ce que** le modem est réalisé de telle manière que les données sont les données de consommation collectées de plusieurs compteurs intelligents d'un bâtiment, et/ou le modem est réalisé de préférence de telle manière qu'il peut être raccordé ou est raccordé à une passerelle de compteur intelligent ou est intégré dans celle-ci.

7. Procédé de transmission de données, **caractérisé en ce que** le procédé est mis en œuvre en utilisant un modem selon l'une quelconque des revendications 1 à 6, dans lequel le modem présente un boîtier, qui est prévu pour être monté dans un compteur de FNN, un rail DIN ou une armoire de compteurs, dans lequel la transmission de données est effectuée par l'intermédiaire d'un réseau de téléphonie mobile au moyen de la technologie du courant porteur en ligne par l'intermédiaire d'un réseau d'alimentation électrique au moyen du modem ou en variante ou en complément de la transmission des données par l'intermédiaire du réseau d'alimentation électrique, en d'autres termes par l'intermédiaire de la technologie du courant porteur en ligne, et dans lequel la transmission de données est effectuée par l'intermédiaire d'un réseau interconnecté par l'intermédiaire du réseau d'alimentation électrique, et dans lequel il peut être commuté entre le réseau de téléphonie mobile et le réseau d'alimentation électrique en fonction de plusieurs paramètres, dans lequel les paramètres sont choisis parmi le groupe suivant : intensité de signal, qualité de signal, latence, vitesse de transmission de données ainsi que nombre des sauts, dans lequel les paramètres sont pondérés.

8. Procédé selon la revendication 7, dans lequel le réseau de téléphonie mobile est priorisé par rapport au réseau d'alimentation électrique ou à la technologie du courant porteur en ligne, dans lequel le réseau de téléphonie mobile est choisi de manière préférée parmi un groupe d'au moins deux réseaux de téléphonie mobile, et les réseaux de téléphonie mobile du groupe sont priorisés de manière préférée entre eux.

9. Procédé selon l'une quelconque des revendications 7 ou 8, **caractérisé en ce que** le réseau de téléphonie mobile est public.

10. Procédé selon l'une quelconque des revendications 7 à 9,
**caractérisé en ce**
**que** la transmission de données est modulée à bande large par l'intermédiaire du réseau d'alimentation électrique et la transmission de données est de préférence à haute fréquence par l'intermédiaire du réseau d'alimentation électrique.

11. Procédé selon l'une quelconque des revendications 7 à 10,
**caractérisé en ce**
**que** le réseau interconnecté fonctionne dans une bande de fréquence sans licence et/ou non restreinte et de préférence le réseau interconnecté fonctionne avec des protocoles IP ouverts.

12. Procédé selon l'une quelconque des revendications 7 à 11,
**caractérisé en ce**
**que** les données sont les données de consommation collectées de plusieurs compteurs intelligents d'un bâtiment, et dans lequel le modem peut être raccordé ou est raccordé idéalement à une passerelle de compteur intelligent ou est intégré dans celle-ci.

13. Procédé selon l'une quelconque des revendications 7 à 12,
**caractérisé en ce**
**que** le réseau interconnecté choisit de manière autonome un chemin optimal menant à une passerelle de compteur intelligent avec une couverture de téléphonie mobile ou avec du réseau de téléphonie mobile
